# EUROPEAN PATENT SPECIFICATION

(11) **EP 4 404 189 B1**
(45) Date of publication and mention of the grant of the patent: **08.04.2026**
(21) Application number: 24152968.4
(22) Date of filing: 19.01.2024
(51) Int. Cl.: G10L 15/22, G10L 17/26, G10L 25/63, G10L 15/08

(54) **AUDITORY AUGMENTATION OF SPEECH**
HÖRVERSTÄRKUNG VON SPRACHE
AUGMENTATION AUDITIVE DE LA PAROLE

(30) Priority: 20.01.2023 US 202318157528
(43) Date of publication of application: 24.07.2024
(73) Proprietor: Bang & Olufsen A/S, 7600 Struer (DK)
(72) Inventor: SCHEUREGGER, Oliver, 2500 Valby (DK); ROSSING, Caroline Mariane, 2400 København NV (DK); TRAN, Thien Quang, 2650 Hvidovre (DK)
(74) Representative: D Young & Co LLP

(56) References cited:
- US-B1- 9 934 785
- NATHAN KARTHIK SUBRAMANIAN ET AL: "EMOSIC - An emotion based music player for Android", 2017 IEEE INTERNATIONAL SYMPOSIUM ON SIGNAL PROCESSING AND INFORMATION TECHNOLOGY (ISSPIT), IEEE, 18 December 2017 (2017-12-18), pages 371 - 276, XP033360585, DOI: 10.1109/ISSPIT.2017.8388671
- CHAN-CHANG YEH ET AL: "Building a Personalized Music Emotion Prediction System", 2 February 2006, ADVANCES IN MULTIMEDIA INFORMATION PROCESSING - PCM 2006 LECTURE NOTES IN COMPUTER SCIENCE;;LNCS, SPRINGER, BERLIN, DE, PAGE(S) 730 - 739, ISBN: 978-3-540-48766-1, XP019047760
- CHIU MING-CHUAN ET AL: "Develop a personalized intelligent music selection system based on heart rate variability and machine learning", MULTIMEDIA TOOLS AND APPLICATIONS, KLUWER ACADEMIC PUBLISHERS, BOSTON, US, vol. 76, no. 14, 13 September 2016 (2016-09-13), pages 15607 - 15639, XP036265542, ISSN: 1380-7501, [retrieved on 20160913], DOI: 10.1007/S11042-016-3860-X
- CERVANTES CARLOS A ET AL: "Embedded Design of an Emotion-Aware Music Player", 2013 IEEE INTERNATIONAL CONFERENCE ON SYSTEMS, MAN, AND CYBERNETICS, IEEE, 13 October 2013 (2013-10-13), pages 2528 - 2533, XP032557282, [retrieved on 20140124], DOI: 10.1109/SMC.2013.431

## Description

### INTRODUCTION

### Field

The present disclosure generally relates to audio processing techniques, and more specifically, to techniques for dynamically augmenting voice content with audio content.

### Background

In today's media-driven society, there are increasingly more ways for a user to access video and audio, with a plethora of devices producing sound in the home, car, or almost any other environment. Portable devices producing audio, such as phones, tablets, laptops, headphones, portable loudspeakers, soundbars, and many other devices, are ubiquitous. The sounds produced by these devices may include, for example, a large variety of audio such as music, speech, podcasts, sound effects, and audio associated with video content.

Additionally, many devices today employ speech recognition technology to allow users to use their voice to interact with the devices. For example, speech recognition technology generally involves converting speech content into text content. The ability to use voice to interact with a device is much easier and more intuitive than using a mouse, keyboard, touchscreen, and other input devices.

The paper by Karthik Subramanian, N., et.al., entitles "EMOSIC - An emotion based music player for Android", as published in 2017 IEEE International Symposium on Signal Processing and Information Technology (ISSPIT), 18 December 2017, pages 371-276, DOl: 10.1109/1SSPlT.2017.8388671, describes that music plays a very important role in human' s daily life and in the modern advanced technologies. Usually, the user has to face the task of manually browsing through the playlist of songs to select. Here the authors are proposing a model, that would generate a playlist based on current emotional state and behaviour of the user. Existing methods for automating the playlist generation process are computationally slow, less accurate and sometimes even require use of additional hardware like EEG or sensors. Speech is the most ancient and natural way of expressing feelings, emotions and mood and its processing requires high computational time, and cost. This proposed system based on real-time extraction of facial expressions as well as extracting audio features from songs to classify into a specific emotion will generate a playlist automatically such that the computation cost is relatively low. In particular, with reference to claim 1, this document does not teach, at least, obtaining, via at least one microphone communicatively coupled to a loudspeaker device, voice content within an environment; nor determining anything corresponding to such voice content; not dynamically augmenting the voice content within the environment with at least one audio content determined from text determined from the voice content, wherein the dynamically augmenting comprises outputting, via a transducer of the loudspeaker device, the at least one audio content in the environment as the voice content is output in the environment.

Document titled "Embedded Design of an Emotion-Aware Music Player", by CERVANTES CARLOS A. Et Al, published at the 2013 IEEE International Conference on Systems, Man, and Cybernetics, on 13 October 2013, on pages 2528-2533 does discuss speech-based music playback. It does teach deriving emotions by analysing prosodic features of the input speech, like energy, pitch and formants, without utilizing textual representation of the spoken words.

### SUMMARY

Particular aspects are set out in the appended independent claims. Various optional embodiments are set out in the dependent claims.

One embodiment described herein is a computer-implemented method. The computer-implemented method includes obtaining, via at least one microphone, voice content within an environment, and determining text content corresponding to the voice content. The computer-implemented method also includes, upon detecting at least one keyword within the text content, determining a first audio content, based at least in part on the at least one keyword. The computer-implemented method also includes predicting at least one emotion associated with the text content, based on evaluating a set of words of the text content with a machine learning algorithm. The computer-implemented method also includes determining a second audio content, based at least in part on evaluating the at least one emotion with a procedural audio engine. The computer-implemented method also includes determining one or more output parameters for at least one of the first audio content or the second audio content, based on one or more acoustic parameters of the voice content. The computer-implemented method further includes controlling one or more transducers within the environment to output at least one of the first audio content or the second audio content, according to the one or more output parameters, as the voice content is output within the environment.

Another embodiment described herein is a computer-implemented method. The computer-implemented method includes obtaining, via at least one microphone communicatively coupled to a loudspeaker device, voice content within an environment. The computer-implemented method also includes determining text content corresponding to the voice content, and determining at least one audio content, based at least in part on the text content. The computer-implemented method further includes dynamically augmenting the voice content within the environment with the at least one audio content, comprising outputting, via a transducer of the loudspeaker device, the at least one audio content in the environment as the voice content is output in the environment.

Another embodiment described herein is a system. The system includes at least one microphone and a loudspeaker communicatively coupled to the at least one microphone. The loudspeaker includes a processor and a memory. The memory stores instructions, which, when executed on the processor, preform an operation. The operation includes obtaining, via the at least one microphone, voice content within an environment. The operation also includes determining text content corresponding to the voice content, and determining at least one audio content, based at least in part on the text content. The operation further includes dynamically augmenting the voice content within the environment with the at least one audio content, comprising outputting, via a transducer of the loudspeaker, the at least one audio content in the environment as the voice content is output in the environment.

Other embodiments provide: an apparatus operable, configured, or otherwise adapted to perform any one or more of the aforementioned methods and/or those described elsewhere herein; a non-transitory, computer-readable media comprising instructions that, when executed by a processor of an apparatus, cause the apparatus to perform the aforementioned methods as well as those described elsewhere herein; a computer program product embodied on a computer-readable storage medium comprising code for performing the aforementioned methods as well as those described elsewhere herein; and/or an apparatus comprising means for performing the aforementioned methods as well as those described elsewhere herein. By way of example, an apparatus may comprise a processing system, a device with a processing system, or processing systems cooperating over one or more networks.

The following description and the appended figures set forth certain features for purposes of illustration.

### BRIEF DESCRIPTION OF DRAWINGS

Various embodiments in accordance with the present disclosure will be described with reference to the drawings, where like designations denote like elements. Note that the appended drawings illustrate typical embodiments and are therefore not to be considered limiting; other equally effective embodiments are contemplated.
**FIG. 1** illustrates an example system, according to one embodiment.
**FIG. 2** illustrates an example computing environment, according to one embodiment.
**FIG. 3** illustrates an example workflow for dynamically augmenting voice content, according to one embodiment.
**FIG. 4** further illustrates certain components of the workflow illustrated in **FIG. 3****,** according to one embodiment.
**FIG. 5** further illustrates certain components of the workflow illustrated in **FIG. 3****,** according to one embodiment.
**FIG. 6** further illustrates certain components of the workflow illustrated in **FIG. 3****,** according to one embodiment.
**FIG. 7** is a flowchart of a method for dynamically augmenting voice content with audio content, according to one embodiment.
**FIG. 8** is a flowchart of another method for dynamically augmenting voice content with audio content, according to one embodiment.
**FIG. 9** is a flowchart of another method for dynamically augmenting voice content with audio content, according to one embodiment.
**FIG. 10A****,** **FIG. 10B****,** and **FIG. 10C** illustrate an example scenarios in which voice content is dynamically augmented with audio content in real-time, according to one embodiment.

### DETAILED DESCRIPTION

The present disclosure provides systems and techniques for dynamically augmenting speech with audio content. More specifically, embodiments provide techniques for augmenting real-time speech with contextual sound reproduced over loudspeaker devices.

In one embodiment described herein, an auditory augmentation system includes a microphone(s) and a loudspeaker(s). The auditory augmentation system may capture real-time speech within an environment via the microphone(s) and analyze the speech in real-time to detect (i) keywords in the speech and (ii) the underlying mood/emotion of the speech. The auditory augmentation system may use the detected keywords to trigger relevant/contextual audio clips from a database and use the classified mood/emotion of the spoken speech to steer a procedural audio engine. The auditory augmentation system may output the triggered audio clips and the procedural audio output from the procedural audio engine from the loudspeaker(s).

As used herein, a hyphenated form of a reference numeral refers to a specific instance of an element and the un-hyphenated form of the reference numeral refers to the collective element. Thus, for example, device "12-1" refers to an instance of a device class, which may be referred to collectively as devices "12" and any one of which may be referred to generically as a device "12".

### Example System with Auditory Augmentation of Speech

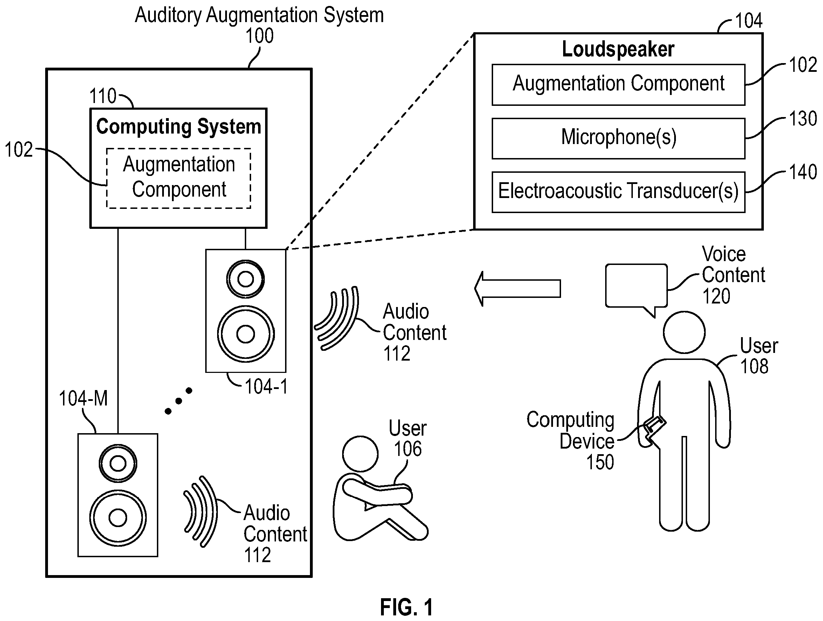

**FIG. 1** illustrates an example auditory augmentation system 100, which is configured to implement one or more techniques described herein, according to one embodiment. The auditory augmentation system 100 may be located in any environment, such as a home, for example, in a living room, home theater, bedroom, yard, or other room, in a vehicle, in an indoor or outdoor venue, or any other suitable location.

As shown, the auditory augmentation system 100 includes a computing system 110 and one or more loudspeakers 104 1-M. The computing system 110 is representative of a variety of computing systems, including, for example, a laptop computer, desktop computer, server, and similar computing devices. In one embodiment, the computing system 110 is located in a cloud computing environment. In such an embodiment, the computing system 110 may include a number of compute resources (e.g., processor(s), memory, and storage) distributed across one or more systems in the cloud computing environment.

The loudspeakers 104 are generally representative of any type of speakers, such as surround-sound speakers, satellite speakers, tower or floor-standing speakers, bookshelf speakers, sound bars, TV speakers, in-wall speakers, smart speakers, and portable speakers. Additionally, the loudspeakers 104 may be installed in fixed positions or moveable. The loudspeakers 104 may be communicatively coupled to the computing system 110 via a wireless or wired connection. That is, the loudspeakers 104 may be wired or wireless. The loudspeakers 104 are generally capable of converting an electrical audio signal into a corresponding sound. As shown, for example, each loudspeaker 104 includes an electroacoustic transducer(s) 140 for converting electrical audio signals into sound. Each loudspeaker 104 also includes a microphone(s) 130 for capturing audio signals in an environment in which the loudspeaker is located.

In some embodiments, the loudspeakers 104 may be controlled via an input controller, such as the computing device 150 (e.g., smartphone or tablet). For example, the computing device 150 may receive user input and may provide corresponding control signals to the loudspeakers 104 to control various settings/functions, such as volume, communication settings, and other suitable settings. In some systems, the loudspeakers 104 may have integrated input controllers.

Note, however, that while the **FIG. 1** depicts microphone(s) 130 within one or more loudspeakers 104, in certain embodiments, the microphone(s) 130 may be non-collocated with the loudspeakers 104. In these embodiments, the microphone(s) 130 may be communicatively coupled with the loudspeakers 104 via a wireless or wired connection. Additionally, although not depicted in **FIG. 1****,** each loudspeaker 104 may also include one or more speaker drivers, subwoofer drivers, woofer drivers, mid-range drivers, tweeter drivers, coaxial drivers, and amplifiers which may be mounted in a speaker enclosure. Additionally, note that while **FIG. 1** depicts the computing system 110 as separate from the loudspeakers 104, in certain embodiments, the computing system 110 is integral with at least one of the loudspeakers 104.

In certain embodiments, each loudspeaker 104 includes an augmentation component 102. Additionally or alternatively, in other embodiments, the computing system 110 includes an augmentation component 102. As described in greater detail below, the augmentation component 102 is configured to implement one or more techniques described herein for dynamically augmenting speech or voice content with audio content in real-time.

Consider the scenario in **FIG. 1****,** which depicts a user 108 interacting with another user 106 within an environment, such as a living room, bedroom, or any other suitable location. In an example scenario, the user 108 (e.g., parent) may be reading a bedtime story to the user 106 (e.g., child). In such a scenario, the voice content 120 of the user 108 may be captured by one or more microphone(s) 130 of one or more loudspeakers 104 in the environment. The augmentation component 102 may analyze the voice content 120 in real-time using speech processing techniques, speech recognition techniques, sentiment analysis techniques, emotion mining, procedural audio algorithms, and combinations thereof, to generate audio content 112 that is contextual with the voice content 120.

For example, assuming the user 108 is reading a bedtime story to the user 106, the augmentation component 102 may employ speech processing to remove background noise from the voice content 120, compute an estimated loudness of the voice content 120, and employ automatic speech recognition (ASR) to convert the voice content 120 to text content. In addition, the augmentation component 102 may analyze the text content to detect certain predefined keywords as well as to predict the underlying emotion of the text content. The augmentation component 102 may then use the predefined keywords and predicted emotion(s) to determine contextual audio content 112 to augment the voice content 120 with in real-time. In the "bedtime story" scenario, for example, when the user 108 reads the word "firework" in the bedtime story, the augmentation component 102 may trigger the loudspeaker(s) 104 to output a firework audio clip. Additionally, the augmentation component 102 may trigger the loudspeaker(s) 104 to play ambient background music that is associated with the underlying emotion of the portion of the bedtime story being read to the user 106. Further, as the mood of the bedtime story shifts (e.g., from upbeat to dark/mysterious or vice versa), the augmentation component 102 may trigger the loudspeaker(s) 104 to gradually shift the ambient background music to match the current underlying emotion of the portion of the bedtime story being read to the user 106.

In some embodiments, the augmentation component 102 also controls one or more output parameters of the audio content 112, based on one or more acoustic parameters of the voice content 120. For example, the augmentation component 102 may compute an estimated loudness of the voice content 120 and use the estimated loudness to adjust the output gain of the loudspeaker(s) 104 to ensure that the voice content 120 is not masked by the loudspeaker(s) 104. It should be understood that the "bedtime story" examples described herein ae merely illustrative, and that the augmentation component 102 may dynamically augment voice content in any scenario in which live or pre-recorded voice content is captured in an environment.

In this manner, embodiments described herein provide techniques that allow for dynamic augmentation of speech or voice content in real-time with contextual audio content in order to create an enhanced immersive auditory experience for users in an environment. For example, the techniques described herein can dynamically adapt to different acoustic environments when performing dynamic augmentation of speech, such that the auditory experience is modified in a way that is intuitive and expected by the users (e.g., speaker and listeners).

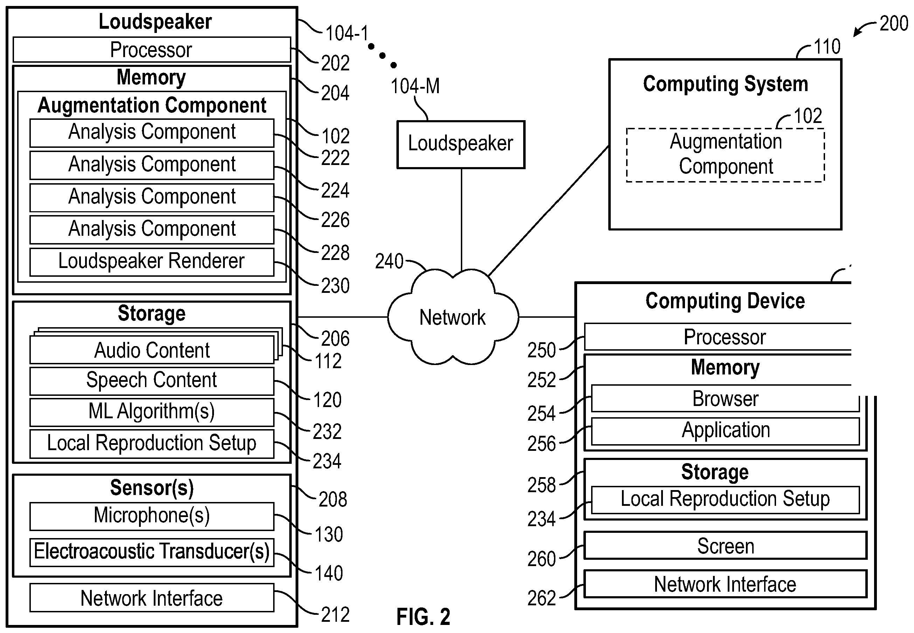

**FIG. 2** illustrates an example of a computing environment 200 used to dynamically augment voice content with audio content, according to one embodiment. As shown, the computing environment 200 includes one or more loudspeakers 104 1-M, computing system 110, and the computing device 150, which are interconnected via a network 240.

The network 240, in general, may be a wide area network (WAN), a local area network (LAN), a wireless LAN, a personal area network (PAN), a cellular network, a wired network, etc. In a particular embodiment, the network 240 is the Internet. Wireless connections between components of the computing environment 200 may be provided via a short-range wireless communication technology, such as Bluetooth, WiFi, ZigBee, ultra wideband (UWB), or infrared. Wired connections between components of the auditory augmentation system 100 may be via auxiliary audio cable, universal serial bus (USB), high-definition multimedia interface (HDMI), video graphics array (VGA), or any other suitable wired connection.

As shown, each loudspeaker 104 includes a processor 202, a memory 204, a storage 206, one or more sensors 208, and a network interface 212. The processor 202 represents any number of processing elements, which can include any number of processing cores. The memory 204 can include volatile memory, non-volatile memory, and combinations thereof.

The memory 204 generally includes program code for performing various functions for dynamically augmenting voice content with audio content. The program code is generally described as various functional "components" or "modules" within the memory 204, although alternate implementations may have different functions or combinations of functions. Here, the memory 204 includes an augmentation component 102. The augmentation component 102 includes an analysis component 222, an analysis component 224, an analysis component 226, and analysis component 228, and a loudspeaker renderer 230, each of which is a software component and is described in greater detail below.

The storage 206 may be a disk drive storage device. Although shown as a single unit, the storage 206 may be a combination of fixed and/or removable storage devices, such as fixed disc drives, removable memory cards, optical storage, network attached storage (NAS), or a storage area network (SAN). Here, the storage 206 includes audio content 112, speech content 120, ML algorithm(s) 232, and a local reproduction setup 234, which is described in greater detail herein.

The sensor(s) 208 includes one or more microphone(s) 130 for recording audio content and one or more electroacoustic transducer(s) 140 for converting electrical audio signals into corresponding sounds. In general, however, the sensor(s) 208 can include any suitable type of sensor that is configured to sense information from the physical environment. The network interface 212 may be any type of network communications interface that allows the loudspeaker 104 to communicate with other computers and/or components in the computing environment 200 via a data communications network (e.g., network 240).

Computing device 150 is generally representative of a mobile or handheld computing device, including, for example, a smartphone, a tablet, a laptop computer, etc. Here, the computing device 150 includes a processor 250, a memory 252, a storage 258, a screen 260, and a network interface 262. The processor 250 represents any number of processing elements, which can include any number of processing cores. The memory 252 can include volatile memory, non-volatile memory, and combinations thereof.

The memory 252 generally includes program code for performing various functions related to applications (e.g., application 256, browser 254) hosted on the computing device 150. The program code is generally described as various functional "applications" or "modules" within the memory 252, although alternate implementations may have different functions or combinations of functions. Here, the memory 252 includes a browser 254 and an application 256. The application 256 and/or browser 254 may be used for a variety of functions, including, for example, accessing voice content, accessing computing system 110 (including augmentation component 102), playing audio content, accessing/controlling settings of the loudspeakers 104, and other suitable functions.

In particular, the browser 254 may be used to access the computing system 110 by rendering web pages received from the computing system 110. The application 256 may be representative of a component of a client server application or other distributed application which can communicate with the computing system 110 over the network 240. Application 256 may be a "thin" client where the processing is largely directed by the application 256, but performed by computing systems, or a conventional software application installed on the computing device 150.

The storage 258 may be a disk drive storage device. Although shown as a single unit, the storage 258 may be combination of fixed and/or removable storage devices, such as fixed disc drives, removable memory cards, optical storage, network attached storage (NAS), or a storage area network (SAN). Here, the storage 258 includes the local reproduction setup 234, which is described in greater detail herein. The screen 260 may include a Liquid Crystal Display (LCD), a Light Emitting Diode (LED), or other display technology. In one embodiment, the screen 260 includes a touch-screen interface. The network interface 262 may be any type of network communications interface that allows the computing device 150 to communicate with other computers and/or components in the computing environment 200 via a data communications network (e.g., network 240).

Note that **FIG. 2** illustrates a reference example of a computing environment 200 in which the techniques presented herein can be implemented and that the techniques presented herein can be implemented in other computing environments.

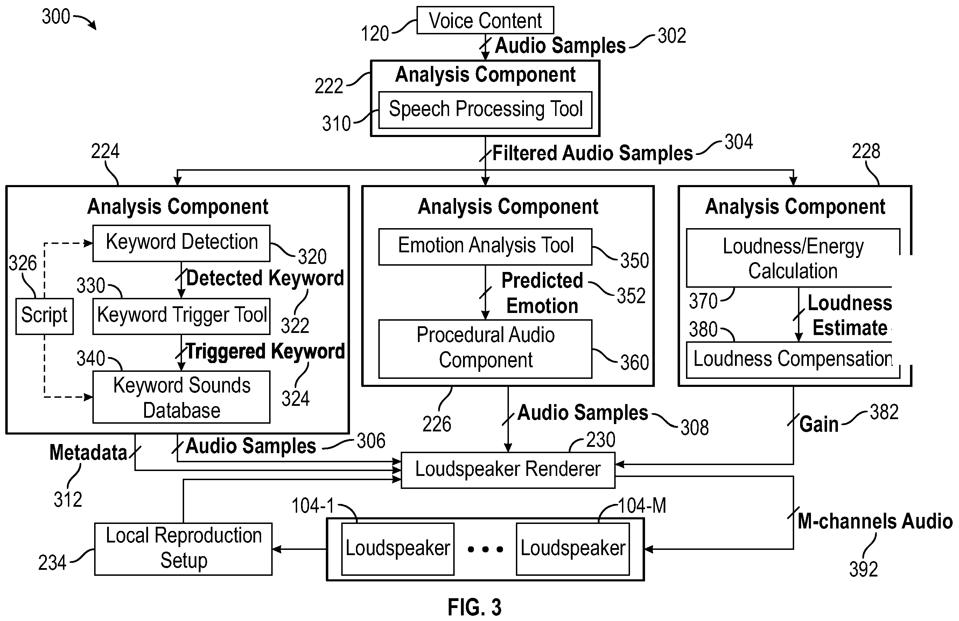

**FIG. 3** illustrates an example workflow 300 for dynamically augmenting voice content with audio content, according to one embodiment. In the workflow 300, the analysis component 222 is configured to employ speech processing techniques on the voice content 120. The speech processing techniques may be used to filter speech signals, for example, to remove competing talkers or background noise. For example, the analysis component 222 includes a speech processing tool 310, which receives audio samples 302 of the voice content 120. The speech processing tool 310 may process the audio samples 302 to improve the speech to noise ratio and may output filtered audio samples 304. In particular, the speech processing tool 310 may remove background noise from the audio samples 302. The filtered audio samples 304 are then provided to the analysis component 224, the analysis component 226, and the analysis component 228.

The analysis component 224 is generally configured to convert the filtered audio samples 304 into text content, and analyze the text content in order to detect and trigger keywords within the text content. As shown, the analysis component 224 includes a keyword detection component 320, a keyword trigger tool 330, and a keyword sounds database 340. The keyword detection component 320 analyzes text content associated with the filtered audio samples 304 at a fine grain resolution to detect a keyword(s) 322.

The keyword trigger tool 330 receives the detected keyword(s) 322 and selects one or more of the detected keyword(s) 322 to use as the triggered keyword(s) 324. For example, assuming the keyword detection component 320 identifies "firework," "thunder," and "ocean," as detected keywords 322, the keyword trigger tool 330 may select "firework" as the triggered keyword 324. In some embodiments, the triggering of detected keyword(s) 322 may be controlled by a time constant to avoid keywords being triggered too often or too seldom.

The keyword trigger tool 330 may use the triggered keyword 324 to retrieve a corresponding audio file from a database. In **FIG. 3****,** for example, the keyword trigger tool 330 retrieves audio samples 306, which correspond to the triggered keyword 324. In addition to the audio samples 306, the keyword trigger tool 330 may obtain metadata 312, which includes relevant contextual data to the audio samples 306 (e.g., target spatial location of the audio samples 306). The analysis component 224 may provide the audio samples 306 and the metadata 312 to a loudspeaker renderer 230.

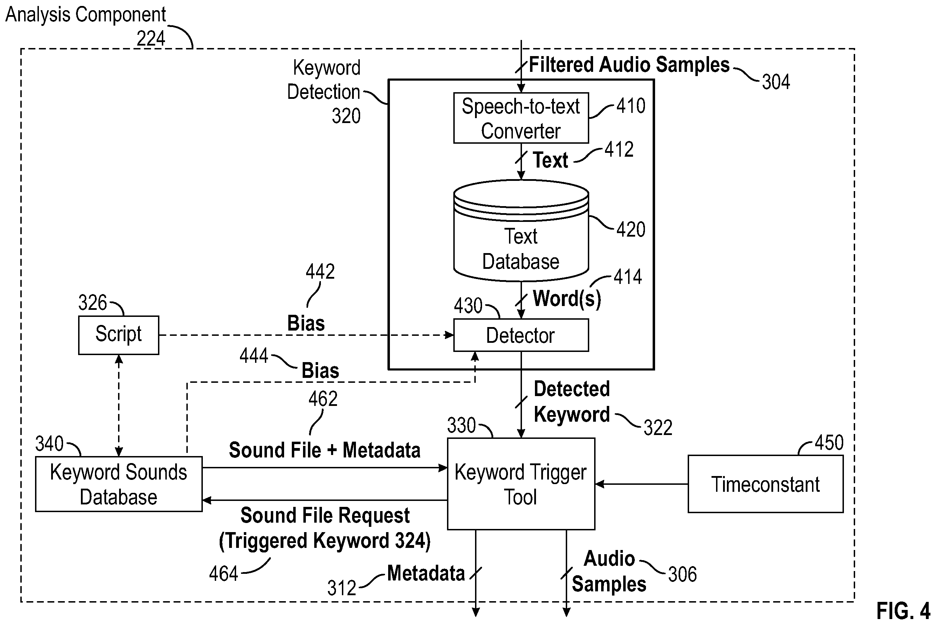

In some embodiments, the analysis component 224 may use a script 326 containing text content of the voice content 120 to aid the keyword detection. For example, if the user is reading a book, then the user's voice content 120 may be known *a priori,* and the script 326 containing text content of the book can be used by the keyword detection component 320 to detect keyword(s) 322. Note, the analysis component 224 is described in greater detail below with respect to **FIG. 4****.**

The analysis component 226 is generally configured to perform sentiment analysis to predict the mood or emotion of the voice content 120 and generate audio content, based on the predicted mood or emotion of the voice content 120. As shown, the analysis component 226 includes an emotion analysis tool 350 and a procedural audio component 360. The emotion analysis tool 350 is configured to predict the current underlying emotion 352 of the voice content 120, where the predicted emotion 352 is a time-varying parameter. For example, the emotion analysis tool 350 receives the filtered audio samples 304 and may evaluate the filtered audio samples 304 using one or more sentiment analysis techniques. In one embodiment described below, the emotion analysis tool 350 employs emotion mining to predict the current underlying emotion of the text content (e.g., words/sentences) of the filtered audio samples 304. The predicted emotion 352 is then provided to the procedural audio component 360.

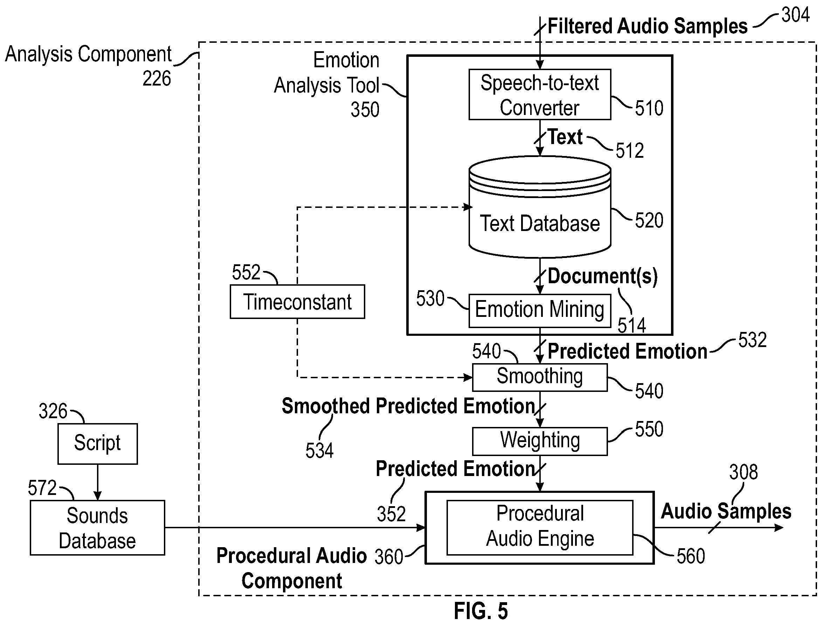

The procedural audio component 360 is generally configured to dynamically generate audio clips, based at least in part on the current predicted emotion 352. Procedural audio generally involves adapting the playback of sound in real-time. Such sound adaptation may be achieved by creating a database of individual sound clips and dynamically selecting a subset of clips, which when combined, elicits a certain percept. Additionally, procedural audio may also involve real-time audio generation. Real-time audio generation can be achieved by controlling individual sound generators (e.g., waveform/tone generators) to compose sound in real-time. In the example depicted in **FIG. 3****,** the procedural audio component 360 generates audio samples 308, based on the current predicted emotion 352 of the filtered audio samples 304 and provides the audio samples 308 to the loudspeaker renderer 230. Note, the analysis component 226 is described in greater detail below with respect to **FIG. 5****.**

The analysis component 228 is generally configured to determine one or more acoustic parameters of the voice content 120. As shown, the analysis component 228 includes a loudness/energy calculation component 370 and a loudness compensation component 380. The loudness/energy calculation component 370 estimates the loudness of the filtered audio samples 304 and generates a loudness estimate 372. The loudness compensation component 380 uses the loudness estimate 372 to control the output level of the loudspeaker(s) 104. For example, the loudness compensation component 380 may compute a gain 382, based on the loudness estimate 372. The gain 382 may be used to dynamically adjust the output level of the loudspeaker(s) 104 to ensure that the reproduced audio is at a target relative level to the speech (e.g., the reproduced audio is audible and does not mask the speaker of the voice content 120).

The loudspeaker renderer 230 is generally configured to map input audio signals to the loudspeakers 104. As shown, the loudspeaker renderer 230 receives audio samples 306, metadata 312, audio samples 308, gain 382, and a local reproduction setup 234. In the embodiment depicted in **FIG. 3****,** the loudspeaker renderer 230 maps the audio samples 306 and the audio samples 308 to one or more of the loudspeakers 104, based on the metadata 312 and the local reproduction setup 234.

The local reproduction setup 234 includes an indication of at least one of (i) the number of loudspeakers 104 within an environment, (ii) the positions of the loudspeakers 104 within an environment, or (iii) capabilities of loudspeakers 104 (e.g., maximum output level, frequency response, sensitivity, non-linearities, and other suitable parameters). For example, different environments may include different numbers of loudspeakers with different capabilities as well as different loudspeaker arrangements.

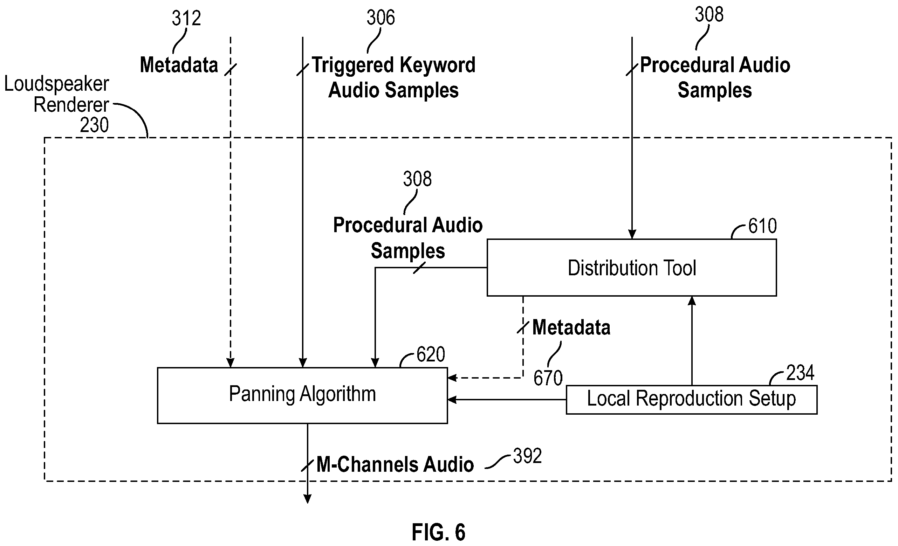

For example, the loudspeaker renderer 230 can apply positional information within the metadata 312 to the audio samples 306. The loudspeaker renderer 230 outputs M-channels audio signal 392 containing the audio samples 306 and the audio samples 308 to the loudspeakers 104. The output level of the loudspeakers 104 may be controlled by the gain 382. Note, the loudspeaker renderer 230 is described in greater detail below with respect to **FIG. 6****.**

**FIG. 4** further illustrates certain components of the analysis component 224 of the workflow 300, described relative to **FIG. 3****,** according to one embodiment. As shown, the keyword detection component 320 includes a speech-to-text converter 410, a text database 420, and a detector component 430. In one embodiment, the speech-to-text converter 410 converts the filtered audio samples 304 into text content 412. The speech-to-text converter 410 can employ any suitable ASR technique to convert the filtered audio samples 304 to text content 412. The text content 412 is stored as words in the text database 420 and parsed as individual words 414.

The detector component 430 implements the keyword detection stage. For example, the detector component 430 may scan the incoming word(s) 414 and flag if a keyword 322 is detected. In one embodiment, the keywords are predefined by the auditory augmentation system 100. In one example, the keywords may be located within a keyword sounds database 340, which is a database of sounds being used. In such an example, a keyword may exist if a corresponding audio file in the keyword sounds database 340 exists. As shown, for example, the detector component 430 may receive a bias 444, which includes an indication of keyword(s) within the keyword sounds database 340.

Additionally, in embodiments where a script 326 is available (e.g., known a priori), the script 326 can be used to bias the keyword detection stage. For example, the detector component 430 may receive a bias 442, which includes an indication of keyword(s) from the script 326. Additionally, in some embodiments, the script 326 itself can be used to bias the keyword sounds database 340. For example, if a keyword from the script 326 does not have a corresponding audio file, the keyword sounds database 340 may be updated.

Once keyword(s) 322 have been detected, the keyword trigger tool 330 implements a keyword trigger stage, which involves triggering one or more of the detected keywords 322. In one embodiment, the triggering of a detected keyword(s) 322 is controlled by the time constant 450. When the keyword trigger tool 330 triggers a keyword, a corresponding sound file is retrieved from the keyword sound database 340. As shown, for example, the keyword trigger tool 330 transmits a sound file request 464, which includes the triggered keyword 324, to the keyword sounds database 340. In response to the sound file request 464, the keyword trigger tool 330 receives the corresponding sound file 462 as well as metadata 312 associated with the sound file 462. The keyword trigger tool 330 may provide audio samples 306 of the sound file 462 and the metadata 312 to the loudspeaker renderer 230.

**FIG. 5** further illustrates certain components of the analysis component 226 of the workflow 300, described relative to **FIG. 3****,** according to one embodiment. As shown, the emotion analysis tool 350 includes a speech-to-text converter 510, a text database 520, and an emotion mining component 530. In one embodiment, the speech-to-text converter 510 converts the filtered audio samples 304 into text content 512. The speech-to-text converter 510 can employ any suitable ASR technique to convert the filtered audio samples 304 to text content 512. The text content 512 is stored as words in the text database 420 and parsed as individual words, sentences, or longer chunks of text (collectively referred to as document(s) 514).

The emotion mining component 530 parses the document(s) 514 and evaluates the document(s) 514 using an emotion mining algorithm to determine a predicted emotion P(emotion) 532 associated with the document(s) 514. The resolution of the parsing of the document(s) 514 may be controlled by the time constant 552. For example, shorter time constants may result in a predicted emotion varying more rapidly, whereas longer time constants may result in a predicted emotion varying less often.

The emotion mining component 530 may employ any suitable emotion mining algorithm to determine P(emotion) 532. For example, the emotion mining component may implement emotion detection (e.g., detecting if text conveys any type of emotion), emotion polarity classification (e.g., determining polarity of existing emotion), emotion classification (e.g., fine grained classification of emotion of text into one or more emotions), and/or emotion cause detection (e.g., determining the reason behind a certain detected emotion). In one embodiment, the emotion mining component 530 uses a 2-dimenisional emotional space as the underlying model of the emotion mining algorithm, which outputs a prediction value for each of a set of emotions. In another embodiment, the emotion mining component 530 may use an emotion mining algorithm that classifies the input as a single emotion.

In **FIG. 5****,** the emotion mining component 530 passes the predicted emotion 532 to a smoothing component 540, which is configured to process the predicted emotion 532 with a smoothing algorithm to reduce rapid changes in the predicted emotion 532. The smoothing component 540 outputs a smoothed predicted emotion 534 to the weighting component 550. The weighting component 550 is configured to apply a set of weights to the smoothed predicted emotion 534 to give greater emphasis to certain emotions. The weighting component 550 may apply weights based on a priori knowledge of the input voice content 120 and/or corresponding text content. For example, if it is known that the voice content 120 contains zero references to "sadness," then the weighting can be set to 0 for "sadness," to minimize any false positives for "sadness" emotion. The weighting component 550 outputs the weighted smoothed predicted emotion 352 to the procedural audio component 360.

The procedural audio component 360 uses the predicted emotion 352 to drive a procedural audio engine 560. As noted, the procedural audio engine 560 may dynamically select a set of audio clips from the sounds database 572, based on the predicted emotion 352 to elicit a certain perception. In some embodiments, assuming the script 326 is available, the script 326 can be used to update the sounds database 572. The procedural audio component 360 outputs the audio samples 308 (containing the selected audio clips) to the loudspeaker renderer 230.

**FIG. 6** further illustrates certain components of the loudspeaker renderer 230 of the workflow 300, described relative to **FIG. 3****,** according to one embodiment. As shown, the loudspeaker renderer 230 includes a distribution tool 610 and a panning algorithm 620. The distribution tool 610 receives the audio samples 308, and provides the audio samples 308 and metadata 670 to the panning algorithm 620. In one embodiment, the metadata 670 includes an indication to distribute the audio samples 308 to the loudspeakers 104 equally. The distribution tool 610 may generate the metadata 670 based on the local reproduction setup 234. For example, the metadata 670 may set the target positions for the audio samples 308 to be equally distributed across the real positions for the loudspeakers 104.

The panning algorithm 620 is configured to map the audio samples 306 and audio samples 308 to the available loudspeakers 104, based on the metadata 312, metadata 670, and local reproduction setup 234. The panning algorithm 620 may be any suitable panning algorithm that maps input signals with target spatial locations to output loudspeaker signals with known spatial locations. For the audio samples 306, the panning algorithm 620 may use the corresponding metadata 312 to position the audio samples 306 at specific target locations in space. For example, if the triggered keyword audio is a "bird," then the metadata 312 may inform the panning algorithm 620 that the target spatial location is elevated. In such an example, the panning algorithm 620 may determine whether elevating the target spatial location for the audio samples 306 is possible, based on the local reproduction setup 234 (e.g., elevating the target spatial location may be a function of the real loudspeaker positions). As shown, the panning algorithm 620 outputs at least one of the audio samples 306 or the audio samples 308 as M-channels audio 392.

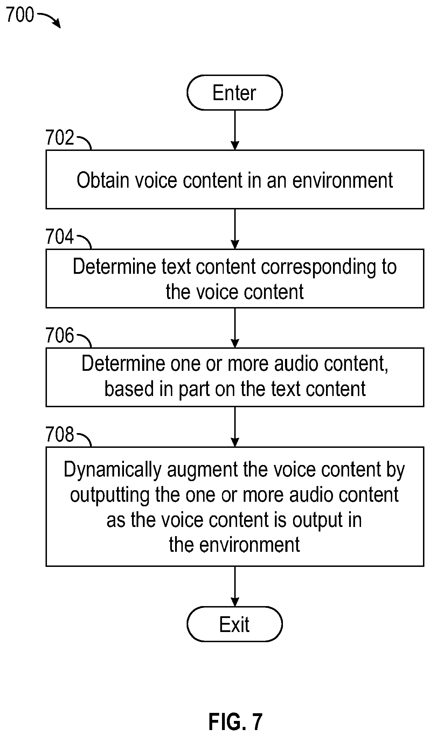

**FIG. 7** is a flowchart of a method 700 for dynamically augmenting voice content with audio content, according to one embodiment. The method 700 may be performed by an augmentation component (e.g., augmentation component 102).

Method 700 may enter at block 702, where the augmentation component obtains voice content (e.g., voice content 120) within an environment. As noted, the augmentation component may obtain the voice content via a microphone(s) 130. The microphone(s) 130 may be integral with one or more loudspeakers (e.g., loudspeakers 104) in the environment or separate from the loudspeakers in the environment.

At block 704, the augmentation component determines text content (e.g., text content 412, 512) corresponding to the voice content. For example, the augmentation component may use ASR techniques to convert the voice content into text content. At block 706, the augmentation component determines one or more audio content (e.g., audio samples 306 and audio samples 308), based in part on the text content. At block 708, the augmentation component dynamically augments the voice content by outputting the one or more audio content as the voice content is output in the environment.

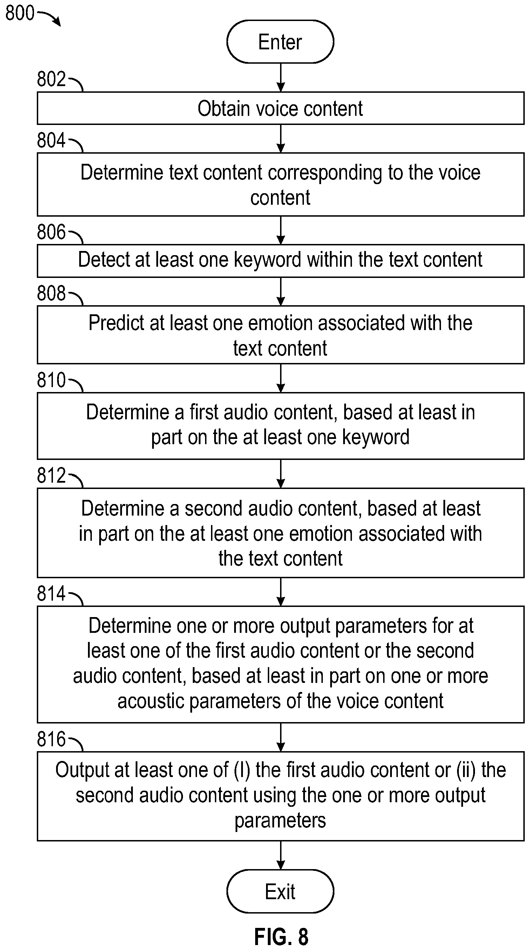

**FIG. 8** is a flowchart of another method 800 for dynamically augmenting voice content with audio content, according to one embodiment. The method 800 may be performed by an augmentation component (e.g., augmentation component 102).

Method 800 may enter at block 802, where the augmentation component obtains voice content (e.g., voice content 120) within an environment. As noted, the augmentation component may obtain the voice content via a microphone(s) 130. The microphone(s) 130 may be integral with one or more loudspeakers (e.g., loudspeakers 104) in the environment or separate from the loudspeakers in the environment.

At block 804, the augmentation component determines text content (e.g., text content 412, 512) corresponding to the voice content. For example, the augmentation component may use ASR techniques to convert the voice content into text content.

At block 806, the augmentation component detects at least one keyword (e.g., keyword 322, 324) within the text content. At block 808, the augmentation component predicts at least one emotion associated with the text content (e.g., predicted emotion 352). At block 810, the augmentation component determines a first audio content (e.g., audio samples 306), based at least in part on the at least one keyword.

At block 812, the augmentation component determines a second audio content (e.g., audio samples 308), based at least in part on the at least one emotion associated with the text content. At block 814, the augmentation component determines one or more output parameters (e.g., gain 382) for at least one of the first audio content or the second audio content, based at least in part on one or more acoustic parameters (e.g., loudness estimate 372) of the voice content. At block 816, the augmentation component outputs at least one of (i) the first audio content or (ii) the second audio content using the one or more output parameters.

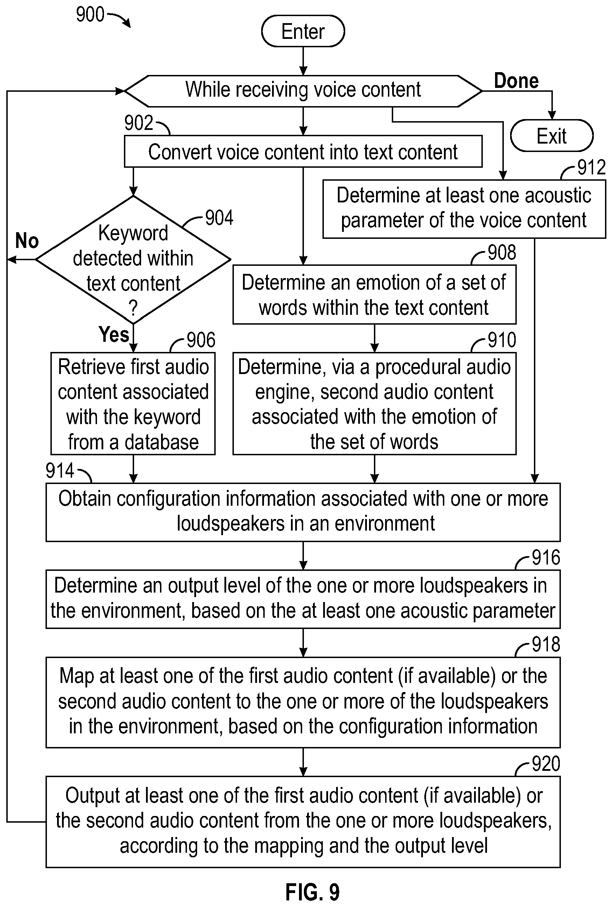

**FIG. 9** is a flowchart of another method 900 for dynamically augmenting voice content with audio content, according to one embodiment. The method 900 may be performed by an augmentation component (e.g., augmentation component 102).

The method 900 may be performed while receiving voice content (e.g., voice content 120) in an environment. At block 902, the augmentation component converts the voice content into text content (e.g., text content 412, 512). At block 904, the augmentation component determines whether a keyword (e.g., keyword 322, 324) is detected within the text content. If so, at block 906, the augmentation component retrieves first audio content (e.g., audio samples 306) associated with the keyword from a database (e.g., keyword sounds database 340).

At block 908, the augmentation component determines an emotion (e.g., predicted emotion 352) associated with a set of words within the text content. At block 910, the augmentation component determines, via a procedural audio engine (e.g., procedural audio engine 560), second audio content (e.g., audio samples 308) associated with the emotion.

At block 912, the augmentation component determines at least one acoustic parameter (e.g., loudness estimate 372) of the voice content. At block 914, the augmentation component obtains configuration information associated with one or more loudspeakers (e.g., loudspeakers 104) in the environment (e.g., local reproduction setup 234). At block 916, the augmentation component determines an output level of the one or more loudspeakers in the environment, based on the at least one acoustic parameter.

At block 918, the augmentation component maps at least one of the first audio content (if available) or the second audio content to the one or more of the loudspeakers in the environment, based on the configuration information. At block 920, the augmentation component outputs at least one of the first audio content (if available) or the second audio content from the one or more loudspeakers, according to the mapping and the output level.

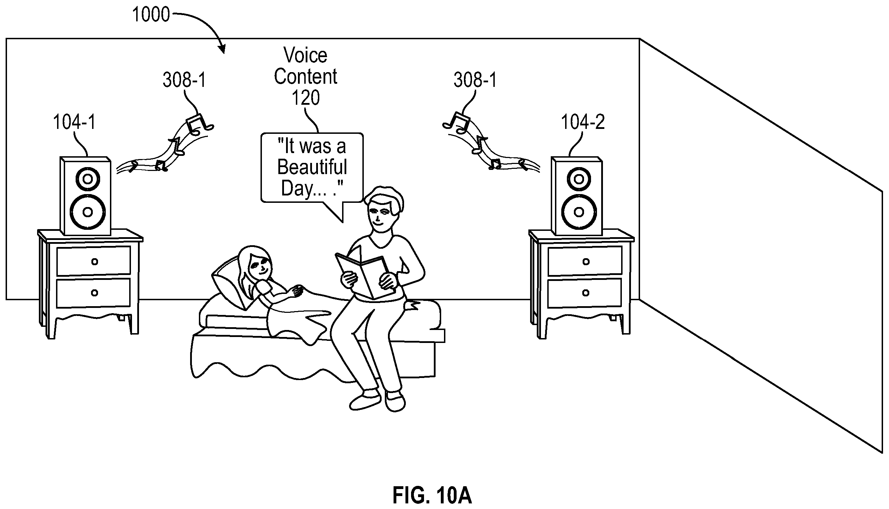

**FIGs. 10A-10C** illustrate an example scenario in which voice content is dynamically augmented with audio content in real-time, according to one embodiment. As shown in **FIG. 10A****,** a first user may be reading a book to a second user in the environment 1000 (e.g., bedroom). As the first user reads the book, the loudspeakers 104 1-2 in the environment 1000 may capture the voice content 120 of the first user in real-time (e.g., as the first user is speaking). In **FIG. 10A****,** for example, at a particular point in time, the loudspeakers 104 1-2 detect the first user speaking "It was a beautiful day ... ." In response to detecting this voice content 120, the loudspeakers 104 1-2 output background ambient audio (e.g., audio samples 308-1) that is associated with "happy" and "uplifting" emotions being conveyed by the voice content 120.

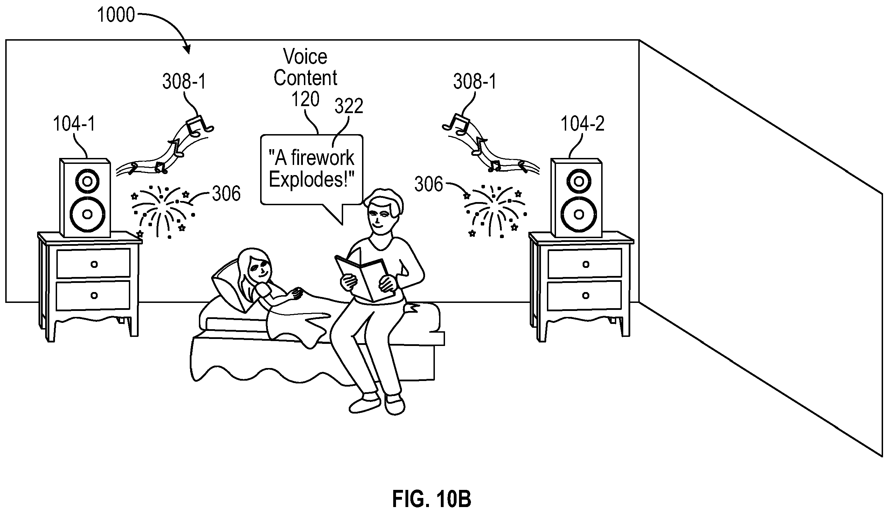

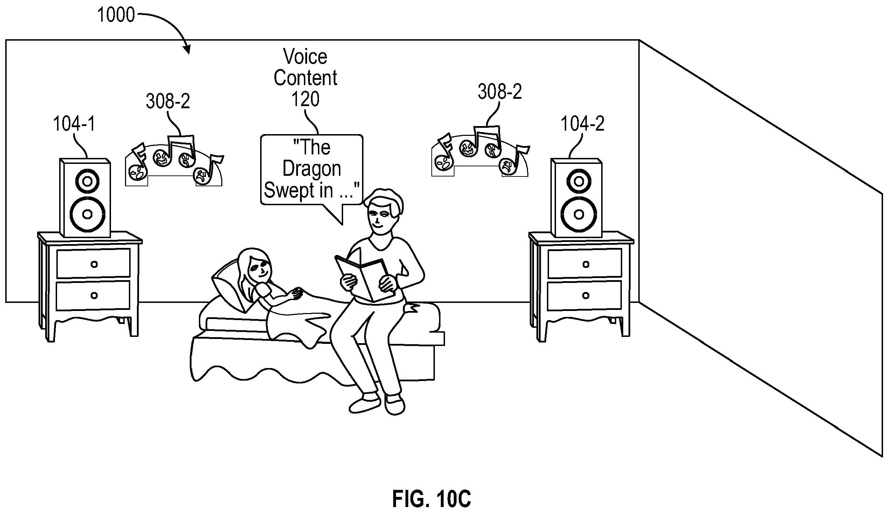

As shown in **FIG. 10B****,** at a subsequent point in time to **FIG. 10A****,** the loudspeakers 104 1-2 detect the first user speaking "A firework explodes!." Here, the loudspeakers 104 1-2 may detect the keyword 322 (e.g., "firework") within the voice content 120 and trigger a corresponding audio clip of a "firework" sound (e.g., audio samples 306). Similarly, as shown in **FIG. 10C****,** at a subsequent point in time to **FIG. 10A** or **FIG. 10B****,** the loudspeakers 104 1-2 may detect a change in mood as the first user reads the book. For example, the loudspeakers 104 1-2 may detect the first user speaking "The dragon swept in ...." In response to detecting this voice content 120, the loudspeakers 104 1-2 may gradually shift to outputting background ambient audio (e.g., audio samples 308-2) associated with "dramatic" and "fearful" emotions being conveyed by the voice content 120.

Advantageously, by providing techniques that allow for dynamic augmentation of speech or voice content in real-time with contextual audio content, embodiments allow devices to create an enhanced immersive auditory experience for users in an environment. For example, the techniques described herein can dynamically adapt to different acoustic environments when performing dynamic augmentation of speech, such that the auditory experience is modified in a way that is intuitive and expected by the users (e.g., speaker and listeners).

Therefore, from one perspective, there have been discussed systems and techniques for dynamically augmenting voice content with audio content. An example technique includes obtaining, via at least one microphone communicatively coupled to a loudspeaker device, voice content within an environment. Text content corresponding to the voice content is determined. At least one audio content is determined, based at least in part on the text content. The voice content within the environment is dynamically augmented with the at least one audio content. The augmenting of the voice content includes outputting, via a transducer of the loudspeaker device, the at least one audio content in the environment as the voice content is output in the environment.

The foregoing may be better understood in view of the following clauses:
Clause 1: A computer-implemented method, comprising: obtaining, via at least one microphone, voice content within an environment; determining text content corresponding to the voice content; upon detecting at least one keyword within the text content, determining a first audio content, based at least in part on the at least one keyword; predicting at least one emotion associated with the text content, based on evaluating a set of words of the text content with a machine learning algorithm; determining a second audio content, based at least in part on evaluating the at least one emotion with a procedural audio engine; determining one or more output parameters for at least one of the first audio content or the second audio content, based on one or more acoustic parameters of the voice content; and controlling one or more transducers within the environment to output at least one of the first audio content or the second audio content, according to the one or more output parameters, as the voice content is output within the environment.
Clause 2: The computer-implemented method of Clause 1, wherein determining the first audio content comprises selecting, from a plurality of audio clips, an audio clip associated with the at least one keyword as the first audio content.
Clause 3: The computer-implemented method of any one of Clauses 1-2, wherein determining the second audio content comprises selecting, via the procedural audio engine, one or more audio clips associated with the at least one emotion from a plurality of audio clips.
Clause 4: The computer-implemented method of any one of Clauses 1-2, wherein determining the second audio content comprises: generating, via the procedural audio engine, one or more audio clips in real-time, based on the at least one emotion; and using the generated audio clips as the second audio content.
Clause 5: A computer-implemented method, comprising: obtaining, via at least one microphone communicatively coupled to a loudspeaker device, voice content within an environment; determining text content corresponding to the voice content; determining at least one audio content, based at least in part on the text content; and dynamically augmenting the voice content within the environment with the at least one audio content, comprising outputting, via a transducer of the loudspeaker device, the at least one audio content in the environment as the voice content is output in the environment.
Clause 6: The computer-implemented method of Clause 5, wherein the voice content is associated with a user currently speaking in the environment.
Clause 7: The computer-implemented method of Clause 5, wherein the voice content comprises pre-recorded voice content of a user.
Clause 8: The computer-implemented method of any one of Clauses 5-7, wherein determining the at least one audio content comprises: detecting at least one keyword within the text content; and selecting, from a plurality of audio clips, an audio clip associated with the at least one keyword as the at least one audio content.
Clause 9: The computer-implemented method of any one of Clauses 5-8, further comprising: determining a target spatial location for the at least one audio content with a panning algorithm; identifying the loudspeaker device, from a plurality of loudspeaker devices, based on the target spatial location and a position of the loudspeaker device; and distributing the at least one audio content to the identified loudspeaker device.
Clause 10: The computer-implemented method of any one of Clauses 5-9, further comprising: identifying a plurality of words within the text content; and predicting at least one of (i) an emotion associated with the plurality of words within the text content or (ii) a context of the plurality of words within the text content, using a sentiment analysis algorithm.
Clause 11: The computer-implemented method of Clause 10, wherein determining the at least one audio content comprises: selecting one or more audio clips using a procedural audio engine, based on at least one of the predicted emotion or the predicted context of the plurality of words; and using the selected one or more audio clips as the at least one audio content.
Clause 12: The computer-implemented method of Clause 10, wherein determining the at least one audio content comprises: generating one or more audio clips using a procedural audio engine, based on at least one of the predicted emotion or the predicted context of the plurality of words; and using the generated one or more audio clips as the at least one audio content.
Clause 13: The computer-implemented method of any one of Clauses 5-12, further comprising determining at least one output parameter for the transducer of the loudspeaker device, based at least in part on an acoustic parameter of the voice content, wherein the at least one audio content is output, via the transducer of the loudspeaker device, according to the at least one output parameter.
Clause 14: The computer-implemented method of Clause 13, wherein the at least one output parameter is an output level.
Clause 15: A system comprising: at least one microphone; and a loudspeaker communicatively coupled to the at least one microphone, the loudspeaker comprising (i) a processor and (ii) a memory storing instructions, which, when executed on the processor perform an operation comprising: obtaining, via the at least one microphone, voice content within an environment; determining text content corresponding to the voice content; determining at least one audio content, based at least in part on the text content; and dynamically augmenting the voice content within the environment with the at least one audio content, comprising outputting, via a transducer of the loudspeaker, the at least one audio content in the environment as the voice content is output in the environment.
Clause 16: The system of Clause 15, wherein the voice content is associated with a user currently speaking in the environment or comprises pre-recorded voice content.
Clause 17: The system of any one of Clauses 15-16, wherein determining the at least one audio content comprises: detecting at least one keyword within the text content; and selecting, from a plurality of audio clips, an audio clip associated with the at least one keyword as the at least one audio content.
Clause 18: The system of any one of Clauses 15-17, the operation further comprising: identifying a plurality of words within the text content; and predicting at least one of (i) an emotion associated with the plurality of words within the text content or (ii) a context of the plurality of words within the text content, using a sentiment analysis algorithm.
Clause 19: The system of Clause 18, wherein determining the at least one audio content comprises: selecting one or more audio clips using a procedural audio engine, based on at least one of the predicted emotion or the predicted context of the plurality of words; and using the selected one or more audio clips as the at least one audio content.
Clause 20: The system of Clause 18, wherein determining the at least one audio content comprises: generating one or more audio clips using a procedural audio engine, based on at least one of the predicted emotion or the predicted context of the plurality of words; and using the generated one or more audio clips as the at least one audio content.
Clause 21: A system comprising: at least one microphone; and a loudspeaker communicatively coupled to the at least one microphone, the loudspeaker comprising (i) a processor and (ii) a memory storing instructions, which, when executed on the processor perform a method according to any of Clauses 1-14.
Clause 22: An apparatus comprising means for performing a method according to any of Clauses 1-14.

The descriptions of the various embodiments of the present disclosure have been presented for purposes of illustration, but are not intended to be exhaustive or limited to the embodiments disclosed. Many modifications and variations will be apparent to those of ordinary skill in the art without departing from the scope of the described embodiments. The terminology used herein was chosen to best explain the principles of the embodiments, the practical application or technical improvement over technologies found in the marketplace, or to enable others of ordinary skill in the art to understand the embodiments disclosed herein.

In the preceding, reference is made to embodiments presented in this disclosure. However, the scope of the present disclosure is not limited to specific described embodiments. Instead, any combination of the features and elements described herein, whether related to different embodiments or not, is contemplated to implement and practice contemplated embodiments. Furthermore, although embodiments disclosed herein may achieve advantages over other possible solutions or over the prior art, whether or not a particular advantage is achieved by a given embodiment is not limiting of the scope of the present disclosure. Thus, the aspects, features, embodiments and advantages described herein are merely illustrative and are not considered elements or limitations of the appended claims except where explicitly recited in a claim(s). Likewise, reference to "the invention" shall not be construed as a generalization of any subject matter disclosed herein and shall not be considered to be an element or limitation of the appended claims except where explicitly recited in a claim(s).

Aspects of the present disclosure may take the form of an entirely hardware embodiment, an entirely software embodiment (including firmware, resident software, microcode, etc.) or an embodiment combining software and hardware aspects that may all generally be referred to herein as a "circuit," "module" or "system."

The present disclosure may be implemented by way of a system, a method, and/or a computer program product. Such a computer program product may include a computer readable medium (or media) comprising (e.g. sorting and/or conveying) computer readable program instructions for causing a processor to carry out aspects of the present disclosure.

A computer readable medium may be provided by way of a computer-readable storage medium and/or a computer-readable transmission medium.

A computer readable storage medium can be a tangible device that can retain and store instructions for use by an instruction execution device. The computer readable storage medium may be, for example, but is not limited to, an electronic storage device, a magnetic storage device, an optical storage device, an electromagnetic storage device, a semiconductor storage device, or any suitable combination of the foregoing. A non-exhaustive list of more specific examples of the computer readable storage medium includes the following: a portable computer diskette, a hard disk, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, and any suitable combination of the foregoing. A computer readable storage medium, as used herein, is not to be construed as being transitory signals *per se,* such as radio waves or other freely propagating electromagnetic waves, electromagnetic waves propagating through a waveguide or other transmission media (e.g., light pulses passing through a fiber-optic cable), or electrical signals transmitted through a wire.

On the other hand, a computer-readable transmission medium can be a transmission signal, such as carrier waves and transmission signals (for example radio waves or other freely propagating electromagnetic waves, electromagnetic waves propagating through a waveguide or other transmission media (e.g., light pulses passing through a fiber-optic cable), or electrical signals transmitted through a wire. A computer-readable transmission medium may convey instructions between components of a single computer system and/or between plural separate computer systems.

Computer readable program instructions described herein can be downloaded to respective computing/processing devices from a computer readable storage medium or to an external computer or external storage device via a network, for example, the Internet, a local area network, a wide area network and/or a wireless network. The network may comprise copper transmission cables, optical transmission fibers, wireless transmission, routers, firewalls, switches, gateway computers and/or edge servers. A network adapter card or network interface in each computing/processing device receives computer readable program instructions from the network and forwards the computer readable program instructions for storage in a computer readable storage medium within the respective computing/processing device. Thus it is understood that such downloading activity is likely to cause instruction stored in a computer-readable storage medium at a source location to then be transmitted using one or more computer-readable transmission mediums (media) and then upon receipt being stored using a computer readable storage medium at a destination location.

Computer readable program instructions for carrying out operations of the present disclosure may be assembler instructions, instruction-set-architecture (ISA) instructions, machine instructions, machine dependent instructions, microcode, firmware instructions, state-setting data, or either source code or object code written in any combination of one or more programming languages, including an object oriented programming language such as Smalltalk, C++ or the like, and conventional procedural programming languages, such as the "C" programming language or similar programming languages. The computer readable program instructions may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider). In some embodiments, electronic circuitry including, for example, programmable logic circuitry, field-programmable gate arrays (FPGA), or programmable logic arrays (PLA) may execute the computer readable program instructions by utilizing state information of the computer readable program instructions to personalize the electronic circuitry, in order to perform aspects of the present disclosure.

Aspects of the present disclosure are described herein with reference to flowchart illustrations and/or block diagrams of methods, apparatus (systems), and computer program products according to embodiments of the disclosure. It will be understood that each block of the flowchart illustrations and/or block diagrams, and combinations of blocks in the flowchart illustrations and/or block diagrams, can be implemented by computer readable program instructions.

These computer readable program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks. These computer readable program instructions may also be stored in a computer readable storage medium that can direct a computer, a programmable data processing apparatus, and/or other devices to function in a particular manner, such that the computer readable storage medium having instructions stored therein comprises an article of manufacture including instructions which implement aspects of the function/act specified in the flowchart and/or block diagram block or blocks.

The computer readable program instructions may also be loaded onto a computer, other programmable data processing apparatus, or other device to cause a series of operational steps to be performed on the computer, other programmable apparatus or other device to produce a computer implemented process, such that the instructions which execute on the computer, other programmable apparatus, or other device implement the functions/acts specified in the flowchart and/or block diagram block or blocks.

The flowchart and block diagrams in the figures illustrate the architecture, functionality, and operation of possible implementations of systems, methods, and computer program products according to various embodiments of the present disclosure. In this regard, each block in the flowchart or block diagrams may represent a module, segment, or portion of instructions, which comprises one or more executable instructions for implementing the specified logical function(s). In some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions.

Embodiments of the disclosure may be provided to end users through a cloud computing infrastructure. Cloud computing generally refers to the provision of scalable computing resources as a service over a network. More formally, cloud computing may be defined as a computing capability that provides an abstraction between the computing resource and its underlying technical architecture (e.g., servers, storage, networks), enabling convenient, on-demand network access to a shared pool of configurable computing resources that can be rapidly provisioned and released with minimal management effort or service provider interaction. Thus, cloud computing allows a user to access virtual computing resources (e.g., storage, data, applications, and even complete virtualized computing systems) in "the cloud," without regard for the underlying physical systems (or locations of those systems) used to provide the computing resources.

Typically, cloud computing resources are provided to a user on a pay-per-use basis, where users are charged only for the computing resources actually used (e.g. an amount of storage space consumed by a user or a number of virtualized systems instantiated by the user). A user can access any of the resources that reside in the cloud at any time, and from anywhere across the Internet. In context of the present disclosure, a user may access applications or related data (e.g., augmentation component 102) available in the cloud. Doing so allows a user to access this information from any computing system attached to a network connected to the cloud (e.g., the Internet).

While the foregoing is directed to embodiments of the present disclosure, other and further embodiments of the disclosure may be devised without departing from the basic scope thereof, and the scope of protection is determined by the claims that follow.

## Claims

1. A computer-implemented method, comprising:
obtaining, via at least one microphone communicatively coupled to a loudspeaker device, voice content within an environment;
determining text content corresponding to the voice content;
determining at least one audio content, wherein the determining is based at least in part on the text content; and
dynamically augmenting the voice content within the environment with the at least one audio content, wherein the dynamically augmenting comprises outputting, via a transducer of the loudspeaker device, the at least one audio content in the environment as the voice content is output in the environment.

2. The computer-implemented method of claim 1, wherein the voice content is associated with a user currently speaking in the environment.

3. The computer-implemented method of claim 1 or 2, wherein the voice content comprises pre-recorded voice content of a user.

4. The computer-implemented method of claim 1, 2 or 3, further comprising:
determining a target spatial location for the at least one audio content with a panning algorithm;
identifying the loudspeaker device, from a plurality of loudspeaker devices, based on the target spatial location and a position of the loudspeaker device; and
distributing the at least one audio content to the identified loudspeaker device.

5. The computer-implemented method of any of claims 1 to 4, wherein determining the at least one audio content comprises:
detecting at least one keyword within the text content; and
selecting, from a plurality of audio clips, an audio clip associated with the at least one keyword as the at least one audio content.

6. The computer-implemented method of any of claims 1 to 5, further comprising:
identifying a plurality of words within the text content; and
predicting, using a sentiment analysis algorithm, at least one of (i) an emotion associated with the plurality of words within the text content or (ii) a context of the plurality of words within the text content.

7. The computer-implemented method of claim 6, wherein determining the at least one audio content comprises:
selecting one or more audio clips using a procedural audio engine, based on at least one of the predicted emotion or the predicted context of the plurality of words; and
using the selected one or more audio clips as the at least one audio content.

8. The computer-implemented method of claim 6 or 7, wherein determining the at least one audio content comprises:
generating one or more audio clips using a procedural audio engine, wherein the generating is based on at least one of the predicted emotion or the predicted context of the plurality of words; and
using the generated one or more audio clips as the at least one audio content.

9. The computer-implemented method of any of claims 1 to 8, further comprising determining at least one output parameter for the transducer of the loudspeaker device, wherein the determining is based at least in part on an acoustic parameter of the voice content, and wherein the at least one audio content is output, via the transducer of the loudspeaker device, according to the at least one output parameter.

10. The computer-implemented method of claim 9, wherein the at least one output parameter is an output level.

11. A system comprising:
at least one microphone;
a loudspeaker communicatively coupled to the at least one microphone;
a processor, and
a memory storing instructions, which, when executed on the processor perform an operation comprising:
obtaining, via the at least one microphone, voice content within an environment;
determining text content corresponding to the voice content;
determining at least one audio content, wherein the determining is based at least in part on the text content; and
dynamically augmenting the voice content within the environment with the at least one audio content, wherein the dynamically augmenting comprises outputting, via a transducer of the loudspeaker, the at least one audio content in the environment as the voice content is output in the environment.

12. The system of claim 11, wherein the instructions, when executed on the processor, perform operations corresponding to the functionality set out in any of claims 2 to 10.

13. A computer-readable medium comprising instructions which, when executed by a processor, cause a computing system comprising the processor to carry out the method of any of claims 1 to 10.

## Patentansprüche

1. Computerimplementiertes Verfahren, umfassend:
Erhalten, über mindestens ein Mikrofon, das kommunikativ mit einer Lautsprechervorrichtung gekoppelt ist, von Sprachinhalt innerhalb einer Umgebung;
Bestimmen von Textinhalt, der dem Sprachinhalt entspricht;
Bestimmen von mindestens einem Audioinhalt, wobei das Bestimmen zumindest teilweise auf dem Textinhalt basiert; und
dynamisches Hörverstärken von Sprachinhalt innerhalb der Umgebung mit dem mindestens einen Audioinhalt, wobei das dynamische Hörverstärken das Ausgeben, über einen Wandler der Lautsprechervorrichtung in der Umgebung, des mindestens einen Audioinhalts umfasst, während der Sprachinhalt in der Umgebung ausgegeben wird.

2. Computerimplementiertes Verfahren nach Anspruch 1, wobei der Sprachinhalt einem Benutzer zugeordnet ist, der derzeit in der Umgebung spricht.

3. Computerimplementiertes Verfahren nach Anspruch 1 oder 2, wobei der Sprachinhalt vorab aufgezeichneten Sprachinhalt eines Benutzers umfasst.

4. Computerimplementiertes Verfahren nach Anspruch 1, 2 oder 3, ferner umfassend:
Bestimmen einer räumlichen Zielposition für den mindestens einen Audioinhalt mittels eines Panning-Algorithmus;
Identifizieren der Lautsprechervorrichtung aus einer Vielzahl von Lautsprechervorrichtungen auf der Grundlage der räumlichen Zielposition und einer Position der Lautsprechervorrichtung; und
Verteilen des mindestens einen Audioinhalts an die identifizierte Lautsprechervorrichtung.

5. Computerimplementiertes Verfahren nach einem der Ansprüche 1 bis 4, wobei das Bestimmen des mindestens einen Audioinhalts umfasst:
Erkennen mindestens eines Schlüsselworts innerhalb des Textinhalts; und
Auswählen, aus einer Vielzahl von Audioclips, eines Audioclips, der dem mindestens einen Schlüsselwort zugeordnet ist, als den mindestens einen Audioinhalt.

6. Computerimplementiertes Verfahren nach einem der Ansprüche 1 bis 5, ferner umfassend:
Identifizieren einer Vielzahl von Wörtern innerhalb des Textinhalts; und
Vorhersagen, unter Verwendung eines Stimmungsanalyse-Algorithmus, (i) einer Emotion, die der Vielzahl von Wörtern innerhalb des Textinhalts zugeordnet ist, und/oder (ii) eines Kontexts der Vielzahl von Wörtern innerhalb des Textinhalts.

7. Computerimplementiertes Verfahren nach Anspruch 6, wobei das Bestimmen des mindestens einen Audioinhalts umfasst:
Auswählen eines oder mehrerer Audioclips unter Verwendung einer prozeduralen Audio-Engine, basierend auf mindestens einem von der vorhergesagten Emotion oder dem vorhergesagten Kontext der Vielzahl von Wörtern; und
Verwenden der ausgewählten einen oder mehreren Audioclips als den mindestens einen Audioinhalt.

8. Computerimplementiertes Verfahren nach Anspruch 6 oder 7, wobei das Bestimmen des mindestens einen Audioinhalts umfasst:
Erzeugen eines oder mehrerer Audioclips unter Verwendung einer prozeduralen Audio-Engine, wobei das Erzeugen auf mindestens einem von der vorhergesagten Emotion oder dem vorhergesagten Kontext der Vielzahl von Wörtern basiert; und
Verwenden der erzeugten einen oder mehreren Audioclips als den mindestens einen Audioinhalt.

9. Computerimplementiertes Verfahren nach einem der Ansprüche 1 bis 8, ferner umfassend das Bestimmen mindestens eines Ausgabeparameters für den Wandler der Lautsprechervorrichtung, wobei das Bestimmen zumindest teilweise auf einem akustischen Parameter des Sprachinhalts basiert, und wobei der mindestens eine Audioinhalt über den Wandler der Lautsprechervorrichtung entsprechend dem mindestens einen Ausgabeparameter ausgegeben wird.

10. Computerimplementiertes Verfahren nach Anspruch 9, wobei der mindestens eine Ausgabeparameter ein Ausgabepegel ist.

11. System, umfassend:
mindestens ein Mikrofon;
einen Lautsprecher, der kommunikativ mit dem mindestens einen Mikrofon gekoppelt ist;
einen Prozessor, und
einen Speicher, der Anweisungen speichert, die bei Ausführung auf dem Prozessor eine Operation durchführen, die umfasst:
Erhalten, über das mindestens eine Mikrofon, von Sprachinhalt innerhalb einer Umgebung;
Bestimmen von Textinhalt, der dem Sprachinhalt entspricht;
Bestimmen von mindestens einem Audioinhalt, wobei das Bestimmen zumindest teilweise auf dem Textinhalt basiert; und
dynamisches Hörverstärken von Sprachinhalt innerhalb der Umgebung mit dem mindestens einen Audioinhalt, wobei das dynamische Hörverstärken das Ausgeben, über einen Wandler des Lautsprechers in der Umgebung, des mindestens einen Audioinhalts umfasst, während der Sprachinhalt in der Umgebung ausgegeben wird.

12. System nach Anspruch 11, wobei die Anweisungen bei Ausführung durch den Prozessor Operationen durchführen, die der in einem der Ansprüche 2 bis 10 dargelegten Funktionalität entsprechen.

13. Computerlesbares Medium, umfassend Anweisungen, die bei Ausführung durch einen Prozessor ein Computersystem, das den Prozessor umfasst, veranlassen, das Verfahren nach einem der Ansprüche 1 bis 10 durchzuführen.

## Revendications

1. Procédé mis en œuvre par ordinateur, comprenant :
l'obtention, par l'intermédiaire d'au moins un microphone couplé de manière communicante à un dispositif de haut-parleur, d'un contenu vocal au sein d'un environnement ;
la détermination d'un contenu textuel correspondant au contenu vocal ;
la détermination d'au moins un contenu audio, la détermination étant basée au moins en partie sur le contenu textuel ; et
l'augmentation dynamique du contenu vocal au sein de l'environnement avec le ou les contenus audio, l'augmentation dynamique comprenant la délivrance, par l'intermédiaire d'un transducteur du dispositif de haut-parleur, du ou des contenus audio dans l'environnement lorsque le contenu vocal est délivré dans l'environnement.

2. Procédé mis en œuvre par ordinateur selon la revendication 1, le contenu vocal étant associé à un utilisateur parlant actuellement dans l'environnement.

3. Procédé mis en œuvre par ordinateur selon la revendication 1 ou 2, le contenu vocal comprenant un contenu vocal préenregistré d'un utilisateur.

4. Procédé mis en œuvre par ordinateur selon les revendications 1, 2 ou 3, le procédé comprenant en outre :
la détermination d'un emplacement spatial cible pour le ou les contenus audio à l'aide d'un algorithme de panoramique ;
l'identification du dispositif de haut-parleur, parmi une pluralité de dispositifs de haut-parleurs, sur la base de l'emplacement spatial cible et d'une position du dispositif de haut-parleur ; et
la distribution du ou des contenus audio au dispositif de haut-parleur identifié.

5. Procédé mis en œuvre par ordinateur selon l'une quelconque des revendications 1 à 4, la détermination du ou des contenus audio comprenant :
la détection d'au moins un mot-clé à l'intérieur du contenu textuel ; et
la sélection, parmi une pluralité de clips audio, d'un clip audio associé au(x) mot(s)-clé(s) en tant que contenu audio.

6. Procédé mis en œuvre par ordinateur selon l'une quelconque des revendications 1 à 5, comprenant en outre :
l'identification d'une pluralité de mots à l'intérieur du contenu textuel ; et
la prédiction, au moyen d'un algorithme d'analyse de sentiment, (i) d'une émotion associée à la pluralité de mots dans le contenu textuel et/ou (ii) d'un contexte de la pluralité de mots dans le contenu textuel.

7. Procédé mis en œuvre par ordinateur selon la revendication 6, la détermination du ou des contenus audio comprenant :
la sélection d'un ou de plusieurs clips audio au moyen d'un moteur audio procédural, sur la base de l'émotion prédite et/ou du contexte prédit de la pluralité de mots ; et
l'utilisation du ou des clips audio sélectionnés en tant que contenu(s) audio.

8. Procédé mis en œuvre par ordinateur selon la revendication 6 ou 7, la détermination du ou des contenus audio comprenant :
la génération d'un ou de plusieurs clips audio au moyen d'un moteur audio procédural, la génération étant basée sur l'émotion prédite et/ou le contexte prédit de la pluralité de mots ; et
l'utilisation du ou des clips audio générés en tant que contenu(s) audio.

9. Procédé mis en œuvre par ordinateur selon l'une quelconque des revendications 1 à 8, comprenant en outre la détermination d'au moins un paramètre de sortie pour le transducteur du dispositif de haut-parleur, la détermination étant basée au moins en partie sur un paramètre acoustique du contenu vocal, et le ou les contenus audio étant délivré, par l'intermédiaire du transducteur du dispositif de haut-parleur, conformément au(x) paramètre(s) de sortie.

10. Procédé mis en œuvre par ordinateur selon la revendication 9, le ou les paramètres de sortie étant un niveau de sortie.

11. Système comprenant :
au moins un microphone ;
un haut-parleur couplé de manière à communiquer avec le ou les microphones ;
un processeur ; et
une mémoire stockant des instructions qui, lorsqu'elles sont exécutées sur le processeur, effectuent une opération comprenant :
l'obtention, par l'intermédiaire du ou des microphones, d'un contenu vocal au sein d'un environnement ;
la détermination d'un contenu textuel correspondant au contenu vocal ;
la détermination d'au moins un contenu audio, la détermination étant basée au moins en partie sur le contenu textuel ; et
l'augmentation dynamique du contenu vocal au sein de l'environnement avec le ou les contenus audio, l'augmentation dynamique comprenant la délivrance, par l'intermédiaire d'un transducteur du haut-parleur, du ou des contenus audio dans l'environnement tandis que le contenu vocal est délivré dans l'environnement.

12. Système selon la revendication 11, les instructions, lorsqu'elles sont exécutées sur le processeur, effectuant des opérations correspondant à la fonctionnalité exposée dans l'une quelconque des revendications 2 à 10.

13. Support lisible par ordinateur comprenant des instructions qui, lorsqu'elles sont exécutées par un ou plusieurs processeurs, amènent un système informatique comprenant le processeur à réaliser le procédé selon l'une quelconque des revendications 1 à 10.
